# EUROPEAN PATENT APPLICATION

(11) **EP 4 597 965 A1**
(43) Date of publication of application: **06.08.2025**
(21) Application number: 23876199.3
(22) Date of filing: 12.06.2023
(51) Int. Cl.: H04L 41/0803

(54) **CONFIGURATION INFORMATION SENDING METHOD AND APPARATUS, AND STORAGE MEDIUM AND ELECTRONIC APPARATUS**

(30) Priority: 10.10.2022 CN 202211235498
(71) Applicant: ZTE CORPORATION, Shenzhen, Guangdong 518057 (CN)
(72) Inventor: ZHANG, Lin, Shenzhen, Guangdong 518057 (CN); WANG, Peng, Shenzhen, Guangdong 518057 (CN); YUAN, Liquan, Shenzhen, Guangdong 518057 (CN); ZHANG, Weiliang, Shenzhen, Guangdong 518057 (CN)
(74) Representative: Deambrogi, Edgardo
(86) International application number: PCT/CN2023/099731
(87) International publication number: WO 2024/077988

(57) **Abstract**

Provided are a configuration information sending method and apparatus, a storage medium, and an electronic apparatus. The method includes: sending configuration information to an ONU through OLT, where the configuration information indicates information about support of GPON asymmetry and/or GPON symmetry by a PON system, the configuration information is determined in a predefined mode, and the configuration information includes a configuration value of an upstream rate of the ONU. In the above technical solution, a problem in the prior art of how to send configuration information to implement support of coexistence of GPON asymmetry and symmetry by the PON system is resolved.

## Description

The present disclosure claims priority to Chinese Patent Application No. 202211235498.0, filed with the China National Intellectual Property Administration on October 10, 2022 and entitled "CONFIGURATION INFORMATION SENDING METHOD AND APPARATUS, AND STORAGE MEDIUM AND ELECTRONIC APPARATUS", which is incorporated herein by reference in its entirety.

### Technical Field

The present disclosure relates to the communication field, and in particular to a configuration information sending method and apparatus, a storage medium, and an electronic apparatus.

### Background

With the continuous development of optical networks, fiber to the home (FTTH) has been fully deployed, and a local product (OLT, Optical Line Terminal) and a terminal product (ONU, Optical Network Unit) of the FTTH are also widely used. In a passive optical network (PON) system, a passive optical fiber network device can be divided into a gigabit-capable passive optical network (GPON), 10-gigabit-capable passive optical networks (XGPON), 10-gigabit-capable symmetric passive optical networks (XGSPON), 50G higher speed passive optical networks (HSPON), and 100GPON, 200GPON in the future, and the like according to different transmission convergence (TC) layer protocols. These passive optical fiber network system architectures usually include optical line terminals (OLTs), optical network units (ONUs), and optical distribution networks.

GPON products currently used in a PON system are asymmetrical. No effective solution has been proposed to resolve a problem of how to send configuration information to implement support of coexistence of GPON asymmetry and symmetry by the PON system in related technologies.

Therefore, it is necessary to improve related technologies to overcome deficiencies in the related technologies.

### SUMMARY

Embodiments of the present disclosure provide a configuration information sending method and apparatus, a storage medium, and an electronic apparatus, to resolve at least a problem of how to send configuration information to implement support of coexistence of GPON asymmetry and symmetry by a PON system.

In an aspect of an embodiment of the present disclosure, a configuration information sending method is provided, including: sending configuration information to an optical network unit (ONU) through an optical line terminal (OLT), where the configuration information indicates information about support of gigabit-capable passive optical network (GPON) asymmetry and/or GPON symmetry by a passive optical network (PON) system, the configuration information is determined in a predefined mode, and the configuration information includes a configuration value of an upstream rate of the ONU.

In another aspect of an embodiment of the present disclosure, a configuration information sending apparatus is further provided, including: a sending module, configured to send configuration information to an ONU through an OLT, where the configuration information indicates information about support of GPON asymmetry and/or GPON symmetry by a PON system, the configuration information is determined in a predefined mode, and the configuration information includes a configuration value of an upstream rate of the ONU.

In still another aspect of an embodiment of the present disclosure, a computer-readable storage medium is further provided, the computer-readable storage medium stores a computer program, and when the computer is set to run, the configuration information sending method is performed.

In yet another aspect of an embodiment of the present disclosure, an electronic apparatus is further provided, including a memory, a processor, and a computer program stored on the memory and executable on the processor, where the processor performs the configuration information sending method through the computer program.

According to the present disclosure, the configuration information is sent to the ONU through the OLT, where the configuration information indicates information about support of the GPON asymmetry and/or the GPON symmetry by the PON system, so that the problem of how to send configuration information to implement support of coexistence of the GPON asymmetry and symmetry by the PON system is resolved.

### Brief Description of the Drawings

The accompanying drawings described herein are used to provide further understanding of the present disclosure and constitute a part of the present disclosure. The exemplary embodiments of the present disclosure and descriptions thereof are used to explain the present disclosure, and do not constitute an improper limitation to the present disclosure. In the accompanying drawings,
FIG. 1 is a structural block diagram of hardware of a computer terminal of a configuration information sending method according to an embodiment of the present disclosure;
FIG. 2 is a flowchart of a configuration information sending method according to an embodiment of the present disclosure;
FIG. 3 is a diagram of an allocation method for reporting a bandwidth with an Alloc-ID for SN according to an embodiment of the present disclosure;
FIG. 4 is a flowchart (1) of a process for determining configuration information when GPON asymmetry and symmetry coexist according to an embodiment of the present disclosure;
FIG. 5 is a flowchart (2) of a process for determining configuration information when GPON asymmetry and symmetry coexist according to an embodiment of the present disclosure; and
FIG. 6 is a structural block diagram of a configuration information sending apparatus according to an embodiment of the present disclosure.

### Detailed Description of the Embodiments

To make a person skilled in the art understand the solutions of the present disclosure better, the following clearly and completely describes the technical solutions in the embodiments of the present disclosure with reference to the accompanying drawings in the embodiments of the present disclosure. Apparently, the described embodiments are merely some of the present disclosure, rather than all embodiments. All other embodiments obtained by a person of ordinary skill in the art based on the embodiments of the present disclosure without creative efforts shall fall within the protection scope of the present disclosure.

It should be noted that, in the specification of the present disclosure, claims, and the accompanying drawings of the present disclosure, the terms "first", "second", and the like are intended to distinguish similar objects but do not necessarily indicate a specific order or sequence. It should be understood that data termed in such a way is interchangeable in proper circumstances, so that embodiments of the present disclosure described herein can be implemented in an order other than the order illustrated or described herein. In addition, the terms "include" and "contain" and any other variants mean to cover the non-exclusive inclusion, for example, a process, method, system, product, or device that includes a series of steps or units is not necessarily limited to those steps or units, but may include other steps or units not expressly listed or inherent to such a process method, product, or device.

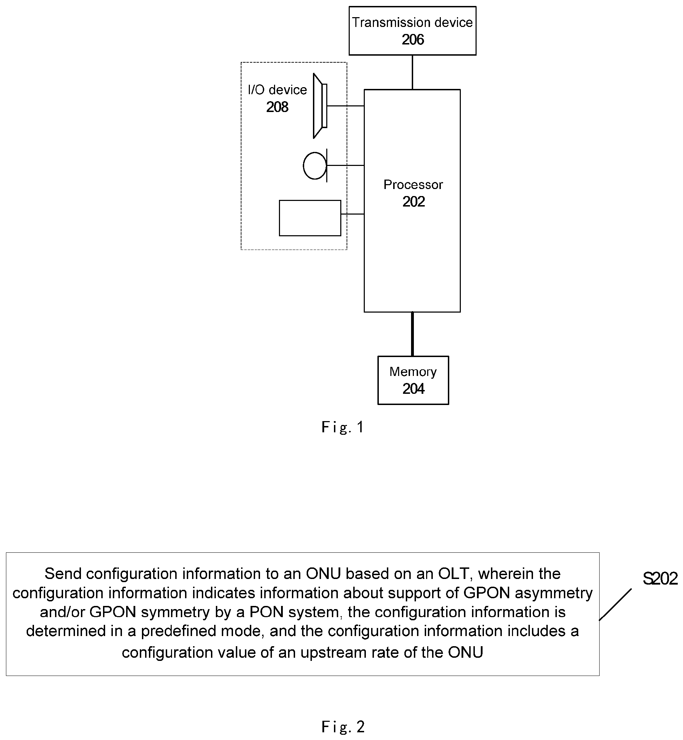

A method embodiment provided in an embodiment of the present disclosure may be performed in a computer terminal or a similar computing apparatus. For example, the method embodiment is performed in the computer terminal. FIG. 1 is a structural block diagram of hardware of a computer terminal of a configuration information sending method according to an embodiment of the present disclosure. As shown in FIG. 1, the computer terminal may include one or more (only one is shown in FIG. 1) processors 202 (the processor 202 may include, but is not limited to, a microprocessor unit (MPU) or a programmable logic device (PLD)) and a memory 204 configured to store data. In an exemplary embodiment, the computer terminal may also include a transmission device 206 configured to implement a communication function and an I/O device 208. A person skilled in the art may understand that the structure shown in FIG. 1 is only illustrative and does not limit a structure of the computer terminal. For example, the computer terminal may further include more or fewer components than shown in FIG. 1 or have a different configuration with equivalent functions or more functions than shown in FIG. 1.

The memory 204 may be configured to store a computer program, for example, a software program and a module of application software, such as a computer program corresponding to a configuration information sending method in the embodiment of the present disclosure. The processor 202 runs the computer program stored in the memory 204, to perform various function applications and data processing, that is, implement the above method. The memory 204 may include a high-speed random access memory, and may further include a non-volatile memory, such as one or more magnetic storage apparatuses, a flash memory, or another non-volatile solid-state memory. In some examples, the memory 204 may further include a memory disposed remotely relative to the processor 202, and these remote memories may be connected to the computer terminal via a network. Examples of the network include but are not limited to the Internet, an intranet, a local area network, a mobile communication network, and a combination thereof.

The transmission device 206 is configured to receive or send data via a network. A specific example of the network may include a wireless network provided by a communication provider of the computer terminal. In an example, the transmission device 206 includes a network adapter (Network Interface Controller, NIC), which may be connected to another network device through a base station to communicate with the Internet. In an example, the transmission device 206 may be a radio frequency (Radio Frequency, RF) module, which is configured to communicate with the Internet wirelessly.

FIG. 2 is a flowchart of a configuration information sending method according to an embodiment of the present disclosure. As shown in FIG. 2, a step of the method includes:
Step S202: Send configuration information to an optical network unit (ONU) through an optical line terminal (OLT), where the configuration information indicates information about support of gigabit-capable passive optical network (GPON) asymmetry and/or GPON symmetry by a passive optical network (PON) system, the configuration information is determined in a predefined mode, and the configuration information includes a configuration value of an upstream rate of the ONU.

In the embodiment of the present disclosure, the configuration information is sent to the ONU through the OLT, where the configuration information indicates the information about support of the GPON asymmetry and/or the GPON symmetry by the PON system, the configuration information is determined in the predefined mode, and the configuration information includes the configuration value of the upstream rate of the ONU. The problem of how to send configuration information to implement support of coexistence of GPON asymmetry and symmetry by the PON system is resolved.

Optionally, in the above embodiment, sending configuration information from the OLT to the ONU can be implemented during information exchange between the OLT and the ONU. The OLT sends complete interaction information to the ONU, and the interaction information carries the configuration information. When the configuration information includes an Extended_Burst_Length message and an Upstream_overhead message, the ONU can determine, based on the configuration information, configuration values such as preamble delimitations carried by different upstream rates. When the configuration information carried in the interaction message includes a Serial_Number_ONU message, the ONU responds to a SN with different SN windowed bandwidths sent by the OLT, and the OLT directly determines a corresponding upstream rate capability supported by the ONU in a corresponding windowed bandwidth when the ONU responds to the SN. When the configuration information includes an Assign_ONU-ID message, the ONU can be specified based on the Assign_ONU-ID message to operate at an upstream rate required for GPON symmetry or asymmetry.

Based on the above embodiment, when information exchange is performed between the OLT and the ONU, the configuration information carried by the exchange information can indicate that the ONU can operate at different upstream rates, thereby achieving a goal of supporting coexistence of the GPON asymmetry and symmetry in the PON system.

In an exemplary embodiment, before the configuration information is sent to the ONU through the OLT, the configuration information can be determined in the predefined mode. Specific steps include: obtaining initial configuration information of the OLT, where the initial configuration information includes an Extended_Burst_Length message of the ONU; defining a first specified byte of the extended burst length message, to obtain an indicated meaning of a first bit of the first specified byte, where the first specified byte is used to represent the upstream rate of the ONU; and determining first configuration information based on an upstream rate value corresponding to the indicated meaning of the first bit, where the configuration information includes the first configuration information, and the indicated meaning of the first bit includes one of the following: the ONU supports the GPON asymmetry, and the ONU supports the GPON symmetry.

Optionally, in an embodiment, in a process of determining the configuration information in the predefined mode, another specified byte except the first specified byte in the extended burst length message may be adjusted based on a definition process of the first specified byte, to be consistent with a meaning of the first bit of the first specified byte. For example, in the case that the first bit is corresponding to a different upstream rate value, preamble values and delimiting values at different upstream rates are sent through other specified bytes, which is not limited thereto. It should be noted that the embodiment is also applicable to a situation in which the configuration information includes an Upstream_Overhead message, a Serial_Number_ONU message, and Assign_ONU-ID message, which is not limited in the present invention.

In an exemplary embodiment, in the case that the initial configuration information of the OLT further includes an Upstream_Overhead message of the ONU, specifically including: defining a second specified byte of the Upstream_Overhead message, to obtain an indicated meaning of a second bit of the second specified byte, where the second specified byte is used to represent the upstream rate of the ONU; and determining second configuration information based on an upstream rate value corresponding to the indicated meaning of the second bit, where the configuration information includes the first configuration information and the second configuration information, and the indicated meaning of the second bit includes one of the following: the ONU supports the GPON asymmetry. and the ONU supports the GPON symmetry.

In an exemplary embodiment, in a process of sending the configuration information to the ONU through the OLT, the following implementation solution is further proposed: obtaining an allocation identifier Alloc-ID sent by the OLT to the ONU, where a first specified identification number of the allocation identifier indicates an upstream rate at which the ONU supports the GPON symmetry; and defining a bandwidth corresponding to a second specified identification number of the allocation identifier, to obtain a symmetry type, indicated by the second specified identification number, when the ONU replies to a serial number SN, where the symmetry type includes at least one of the following: the GPON asymmetry and the GPON symmetry.

In an exemplary embodiment, before the bandwidth corresponding to the second specified identification number of the allocation identifier is defined, the second specified identification number may also be determined in the following solution, specifically including: for multiple specified identification numbers to be defined, determining, based on a selection instruction of a target object, the second specified identification number from the multiple specified identification numbers to be defined, or determining, as the second specified identification number, a default specified identification number in the multiple specified identification numbers to be defined, where the default specified identification number is an identification number, in the allocation identifier, indicating a broadcast bandwidth.

In an exemplary embodiment, before the configuration information is sent to the ONU through the OLT, another technical solution for determining the configuration information in the predefined mode is also proposed, specifically including: receiving standard capability information sent by the ONU through the OLT, where the standard capability information indicates an upstream rate capability supported by the ONU, and includes at least the Serial_Number_ONU message; defining a third specified byte of the Serial_Number_ONU message, to obtain an indicated meaning of a third bit of the third specified byte, where the third specified byte is used to represent a upstream rate capability supported by the ONU; and determining third configuration information based on an upstream rate value corresponding to the indicated meaning of the third bit, where the configuration information includes the third configuration information, and the indicated meaning of the third bit includes one of the following: the ONU supports the GPON asymmetry, and the ONU supports the GPON symmetry.

In an exemplary embodiment, in the process of sending the configuration information to the ONU through the OLT, the sequence number SN message sent when the ONU response bandwidth information is sent can also be received through the OLT; and determining, based on the serial number message, the upstream rate capability supported by the ONU, where the serial number message includes at least one of the following: an upstream rate at which the ONU supports the GPON asymmetry, and an upstream rate at which the ONU supports the GPON symmetry.

In an exemplary embodiment, before the configuration information is sent to the ONU through the OLT, another implementation process for determining the configuration information in the predefined mode is proposed, and specific steps are as follows: obtaining an assignment identification message Assign_ONU-ID message sent by the OLT to the ONU, where the assignment identification message carries a specified upstream rate of the ONU; defining a fourth specified byte of the assignment identification message, to obtain an indicated meaning of a fourth bit of the fourth specified byte, where the fourth specified byte is used to represent a standard upstream rate of the ONU; and determining fourth configuration information based on an upstream rate value corresponding to the indicated meaning of the fourth bit, where the configuration information includes the fourth configuration information, and the indicated meaning of the fourth bit includes one of the following: the ONU supports the GPON asymmetry, and the ONU supports the GPON symmetry.

In an exemplary embodiment, after the fourth specified byte of the assignment identification message is defined, further, for an ONU supporting the GPON asymmetry or the GPON symmetry, the assignment identification message is sent to the ONU, to determine the standard upstream rate of the ONU, or the standard upstream rate of the ONU is determined based on the upstream rate supported by the ONU; and for the ONU supporting the GPON asymmetry or the GPON symmetry, the assignment identification message is sent to the ONU through the OLT, to determine the standard upstream rate of the ONU.

In an exemplary embodiment, in the process of sending the configuration information to the ONU through the OLT, a bandwidth granularity can be defined. Optionally, determining transmitted data volume and the upstream rate of the ONU within a bandwidth transmission time period of an upstream data frame of the GPON system, and determining a first bandwidth granularity based on the transmitted data volume and the upstream rate; and in the case that the bandwidth transmission time period remains unchanged, multiplying the transmitted data volume and the upstream rate by integer multiples, and determining a multiplier value for multiplying the transmitted data volume or a multiplier value of the upstream rate as a second bandwidth granularity, where the multiplier value of the transmitted data volume and the multiplier value of the upstream rate are the same.

Optionally, in the above embodiment, the first specified byte, the second specified byte, the third specified byte, and the fourth specified byte are flexibly selected, are not fixed and unchanging bytes, and may be directly specified by the target object, which is not limited herein.

Next, the configuration information sending method is further described with reference to the following embodiments.

In an embodiment, when GPON asymmetry and symmetry coexist in the PON system, a process of determining the configuration information is described before the configuration information is sent to the ONU through the OLT, which specifically includes the following steps.

Step 1: Issue an Extended_Burst_Length message and an Upstream_overhead message.

As shown in Table 1, when the OLT sends the Extended_Burst_Length message, a fifth byte (equivalent to the above first specified byte) is added to the Extended_Burst_Length message. A specific definition is as follows, where bit U bing 0 represents asymmetry, and bit U being 1 represents symmetry. In addition, configuration values at different upstream rates are issued simultaneously.

**Table 1 Extended_Burst_Length message**

| **Octet** | **Content** | **Description** |
|---|---|---|
| 1 | 11111111 | Broadcast message to all ONUs. |
| 2 | 00010100 | Message identification "Extended_Burst_Length" (Note 1). |
| 3 | PPPPPPPP | pppppppp = Number of type 3 preamble bytes to be used while the ONU remains in the 'pre-ranged' states: Serial_Number state (03) and Ranging state (04). Each byte of the type 3 preamble contains the pattern specified in octet 6 of the Upstream_Over head message. |
| | | (Note 2). |
| 4 | rrrrrrrr | rrrrrrrr = Number of type 3 preamble bytes to be used after the ONU enters the Operation state (05). Each byte of the type 3 preamble contains the pattern specified in Octet 6 of the Upstream_Overhead message (Note 2). |
| 5 | rate | 0000 000U, where: U - upstream nominal line rate, |
| | | U = 0, indicating the upstream rate of 1.24416 Gbit/s; |
| | | U = 1, indicating the upstream rate of 2. 48832 Gbit/s; |
| 6 - 12 | Unspecified | Reserved for future study. |
| NOTE 1 - The use of Extended_Burst_Length message by the OLT is optional. The support of this message by the ONU is mandatory. | | |
| NOTE 2 - As it is the case with the Upstream_Overhead message, the parameters of the Extended_Burst_Length message, having been received and processed by the ONU once during its activation, continue to mandate the ONU's behaviour throughput the activity cycle, i.e., until the ONU is deactivated by the 0LT or moves itself into the Standby state(02). Type 1, 2 and 3 preambles are defined in the message definition and notes of the Upstream_Overhead message (see clause 9.2.3.1).When the Extended_Burst_Length message is not used by the OLT, the length of the Type 3 preamble is determined by subtracting the lengths of the guard bits, types 1 and 2 preambles and delimiter from the recommended burst mode overhead time specified in Appendix I of [ITU-T G. 984.2]. If the Extended_Burst_Length message is used, the values specified in octets 3 and 4 of this message supersede the length of the type 3 preamble implied by the "Upstream_Overhead" message. The maximum length of the entire burst mode overhead is 128 bytes. Note that the length of the type 3 preamble is an integer number of bytes. It is the responsibility of the OLT to ensure that the total length of the burst mode overhead (guard bits + type 1 + type 2 + type 3 + delimiter) is also an integer number of bytes. | | |

As shown in Table 2, when the OLT issues the Upstream-Overhead message, a u bit of a tenth byte (equivalent to the above second specified byte) is added to the Upstream-Overhead message. A specific definition is as follows, where bit u being 0 represents asymmetry, and bit u being 1 represents symmetry. In addition, configuration values such as preambles and delimiters are issued simultaneously at different upstream rates.

**Table 2 Upstream_Overhead message**

| Octet | Content | Description |
|---|---|---|
| 1 | 11111111 | Broadcast message to all ONUs. |
| 2 | 00000001 | Message identification "Upstream_Overhead". |
| 3 | gggggggg | gggggggg = Number of guard bits. |
| 4 | xxxxxxxx | xxxxxxxx = Number of type 1preamble bits. Type 1 preamble bits contain the 'all-ones'pattern. This may be set to zero. |
| 5 | yyyyyyyy | yyyyyyyy = Number of type 2 preamble bits. Type 2 preamble bits contain the 'all-zeroes'pattern. This may be set to zero. |
| 6 | cccccccc | cccccccc = Pattern to be used for type 3 preamble bits (Note 1). |
| 7 | bbbbbbbb | Data to be programmed in delimiter byte 1 (Notes 2 and 3). |
| 8 | bbbbbbbb | Data to be programmed in delimiter byte 2. |
| 9 | bbbbbbbb | Data to be programmed in delimiter byte 3. |
| 10 | Xuemsspp | x = Reserved: |
| | | U = 0, indicating the upstream rate of 1.24416 Gbit/s; or |
| | | U = 1, indicating the upstream rate of 2.48832 Gbit/s. |
| | | e= Status of delay pre-equalization mechanism:"0"= No |
| | | pre-assigned delay,"1" = Use pre-assigned delay given below. |
| | | m= Status of SN_Mask mechanism:"0" = SN_Mask disabled, "1" = SN_Mask enabled (Note 5) |
| | | ss = Max number of extraSN-transmissions sent in response to a single SN-request. For example, ss =10 means an ONU will send 3SN-transmissions when responding to a SN-request(Note 6). |
| | | Default ONU transmit power level mode |
| | | pp = "00" - Mode 0: Normal. |
| | | pp = "01" - Mode 1: Normal - 3 dB. |
| | | pp = "10" - Mode 2: Normal - 6 dB. |
| | | pp = "11" - Reserved. |
| | | (Note 4) |
| 11 | dddddddd | MSB of pre-assigned delay (32 byte units). |
| 12 | dddddddd | LSB of pre-assigned delay (32 byte units). |
| NOTE1 - The length of Type 3 preamble can be calculated by subtracting the number of bits allocated to guard time, type 1 preamble and type 2 preamble, by the Upstream_0verhead message, as well as 24 bits of the delimiter from the total burst mode overhead time specified in Table I.2 of [ITU-T G.984.2] | | |
| The ONU uses the octet 6 pattern to fill the length of type 3 preamble, aligning the MSB of the | | |
| pattern with the MSB of the preamble, repeating the pattern as many time as necessary, and leaving any partial pattern adjacent to the delimiter. | | |
| NOTE 2 - The delimiter pattern occupies the last 24 bits of the burst mode overhead time. In those cases when the actual delimiter is shorter than 24 bits, it is the responsibility of the 0LT to specify the pattern in octet 7 so that its MSB can serve as the latter part of the preamble. | | |
| NOTE 3 - For 16-bit delimiters, these values are proposed: 0x85B3,0x8C5B, 0xB433, 0xB670 and 0xE6D0. For 20-bit delimiter,0xB5983 is proposed. | | |
| NOTE 4 - Be mindful that the coding of the power level modes in the upstream overhead message, where 0 is highest and 2 is lowest, is opposite to that in the Serial_Number_ONU message. | | |
| NOTE 5 - As the Serial_Number_Mask message has been deprecated, the m bit shall be set to 0. | | |
| NOTE 6 - As multiple SN transmission method has been effectively deprecated, ss bits shall be set to 00. | | |

Step 2: Allocate an OLT windowed bandwidth.

The coexistence of GPON asymmetry and symmetry in the PON system requires the OLT to issue windowed bandwidths for different Alloc-IDs (an allocation identifier, which is a 12-bit number allocated by the OLT to the ONU for identifying a traffic carrier entity and is a recipient of an upstream allocated bandwidth within the ONU).

As shown in Table 3-1, a bandwidth with the Alloc-ID of 255 is defined as that the ONU supporting the GPON symmetry performs SN reply; and a bandwidth with the Alloc ID of 254 is defined as that the ONU supporting the GPON asymmetry performs SN reply.

Alternatively, other Alloc IDs within a standard range can be redefined. For example, a bandwidth with the Alloc-ID of 253 is defined, to support SN reporting with GPON symmetry, and the like.

**Table 3-1-Alloc-ID values**

| **Alloc-ID** | **Designation** | **Comment** |
|---|---|---|
| 0..253 | Default | Default Alloc-ID,which is implicitly assigned with and is equal to the ONU-ID. |
| 254 | Broadcast | Used by 0LT in a serial number request allocation structure to indicate that any ONU executing the serial number acquisition phase of the activation procedure may use this allocation to transmit a serial number response. |
| 255 | Broadcast | Support GPON symmetric for SN request. |
| 256..4095 | Assignable | If more than a single Alloc-ID is needed for an ONU, the OLT assigns additional Alloc-IDs to that ONU by selecting a unique number from this range and communicating it to the ONU using the Assign_Alloc-ID PLOAM message. |

For support of the GPON asymmetry and symmetry, as shown in Table 3-2, another Alloc-ID can be defined, such as 253, to support both the GPON asymmetry and symmetry. Alternatively, other Alloc-IDs within a standard range can be redefined. For example, a bandwidth with the Alloc-ID of 256 is defined, to perform SN reporting that supports both the GPON asymmetry and symmetry, and the like.

**Table 3-2-Alloc-ID values**

| **Alloc-ID** | **Designation** | **Comment** |
|---|---|---|
| 0..252 | Default | Default Alloc-ID, which is implicitly assigned with and is equal to the ONU-ID. |
| 253 | Broadcast | Support GPON asymmetric and symmetric for SN request. |
| 254 | Broadcast | Used by OLT in a serial number request allocation structure to indicate that any ONU executing the serial number acquisition phase of the activation procedure may use this allocation to transmit a serial number response. |
| 255 | Broadcast | Support GPON symmetric for SN request. |
| 256.. 4095 | Assignable | If more than a single Alloc-ID is needed for an ONU, the OLT assigns additional Alloc-IDs to that ONU by selecting a unique number from this range and communicating it to the ONU using the Assign_Alloc-ID PLOAM message. |

Step 3: The ONU reports an upstream rate capability.

It should be noted that the coexistence of the GPON asymmetry and symmetry in the PON system can be reported by the ONU with or without carrying the upstream rate capability. In the case that the coexistence is reported without carrying the upstream rate capability, the OLT responds to SN reporting at different received bandwidths for distinguishing. For the response to different windowed bandwidths, first, the ONU can represent an upstream rate capability supported by itself by setting the response to different windowed bandwidths.
1. In the case that the both the GPON asymmetry and symmetry are supported, because only one bit can be used, a third capability cannot be carried. Therefore, the ONU can represent an upstream rate capability supported by itself by setting the response to different windowed bandwidths. For example, in the case that the both the GPON asymmetry and symmetry are supported, if the bandwidth with the Alloc-ID of 253 is set to reply, it indicates that the GPON asymmetry and symmetry are supported.
2. Alternatively, reporting can be performed through a private ploam (representing physical layer operations, administration, and maintenance of a GTC layer system protocol stack in a GPON protocol layer) or an omci message. In the case of reporting, as shown in Table 4, in the following method, the upstream rate capability can be reported through a standard ploam message, such as a Serial_Number_ONU message. When the upstream rate capability is reported through the Serial_Number_ONU message, a byte 12 is defined as follows: A bit represents a capability to support the upstream rate, 0 represents the GPON asymmetry, and 1 represents the GPON symmetry.

**Table 4 Serial_Number_ONU**

| **Octet** | **Content** | **Description** |
|---|---|---|
| 1 | 11111111 ONU-ID | No ONU-ID was assigned yet. |
| | | If the ONU-ID was assigned to this ONU. |
| 2 | 00000001 | Message identification "Serial_Number_ONU". |
| 3 | VID1 | Vendor_ID byte 1. |
| 4 | VID2 | Vendor_ID byte 2. |
| 5 | VID3 | Vendor_ID byte 3. |
| 6 | VID4 | Vendor_ID byte 4 (Note 1). |
| 7 | VSSN1 | Vendor-specific serial number byte 1. |
| 8 | VSSN2 | Vendor-specific serial number byte 2. |
| 9 | VSSN3 | Vendor-specific serial number byte 3. |
| 10 | VSSN4 | Vendor-specific serial number byte 4. |
| 11 | RRRRRRRR | The random delay (MSB) (In 32-byte units) used by the ONU when sending this message. |
| 12 | RRRRAGTT | RRRR = random delay(LSB)(in 32-byte units)used by the ONU when sending this message. |
| | | A=0: GPON asymmetric. |
| | | A=1:GPON symmetric. |
| | | G = GEM transport is supported by this ONU(G= 1:supported). |
| | | TT = ONU TX Power Level Mode used by the ONU. |
| | | TT = 00:Low power. |
| | | TT =01:Medium power. |
| | | TT =10: High power. |
| | | TT = 11: Reserved. |
| NOTE 1 - The code set for the Vendor_ID is specified in [b-ANSI T1.220]. The 4 characters are mapped in the 4-byte field by taking each ASCII/ANSI character code and concatenating them. | | |
| Example: | | |
| Vendor_ID = ABCD | | |
| VID1 = 0x41, VID2 = 0x42, VID3 = 0x43, VID4 = 0x44. | | |
| NOTE 2 -Be mindful that the coding of the power level modes in the Serial_Number_ONU message, | | |
| where 2 is highest and 0 is lowest, is opposite to that in the Upstream_Overhead message. | | |

Step 4: OLT issues an upstream operating rate of the ONU.

The Assign_ONU-ID message is used to carry a specified upstream rate at which the ONU operates. For an ONU that supports only a single upstream rate, a specified upstream rate can be issued or not issued. To be specific, the ONU operates based on a rate capability reported by the ONU itself. As shown in Table 5, for a rate that supports both the GPON asymmetry and symmetry, the OLT is required to issue the Assign_ONU-ID message which carries a specified upstream operating rate of the ONU.

**Table 5 Assign_ONU-ID message**

| **Octet** | **Content** | **Description** |
|---|---|---|
| 1 | 11111111 | Broadcast message to all ONUs. |
| 2 | 00000011 | Message identification "Assign_ONU-ID". |
| 3 | pppppppp | VONU-ID. |
| 4 | abcdefgh | Serial number byte 1. |
| 5-10 | ..... | |
| 11 | stuvwxyz | Serial number byte 8 |
| 12 | Upstream nominal line rate indicator) | 0000 000U, where: U - upstream nominal line rate, |
| | | U = 0, 1.24416 Gbit/s; |
| | | U = 1, 2.48832 Gbit/s. |
| | | This indicator is only applicable for an ONU supporting multiple (1.24416 and 2.48832 Gbit/s)upstream line rates to select the instructed upstream nominal line rate to operate. |
| NOTE -This message is used to assign an ONU-ID to a physical ONU. Later, Alloc-IDs are assigned to each T-CONT of the specific ONU according to its ONU-ID. | | |

Step 5: Define a bandwidth granularity:
According to the G. 984.3 standard, duration of an upstream GTC frame (G-PON Transmission Convergence) is defined as 125 µs. In a 1.24416 Gbit/s G-PON system, a size of the upstream GTC frame is 19,440 bytes. In a G-PON system with an upstream rate of 2.48832 Gbit/s, a size of the GTC frame is 38,880 bytes. As shown in Table 6, according to a definition of StartTime in a standard, a bandwidth granularity of either the GPON asymmetry or symmetry is one byte. In the case of the GPON symmetry, the granularity can also be changed to two bytes, to maintain bandwidth allocation the same as the GPON asymmetry.

**Table 6 Bandwidth allocation table**

| **Upstream bit rate** | **Maximum StartTime value** |
|---|---|
| 1244. 16 Mbit/s | 19438 |
| 2488.32 Mbit/s | 19438 |

The following describes in detail the technical method in the present disclosure with reference to accompanying drawings.

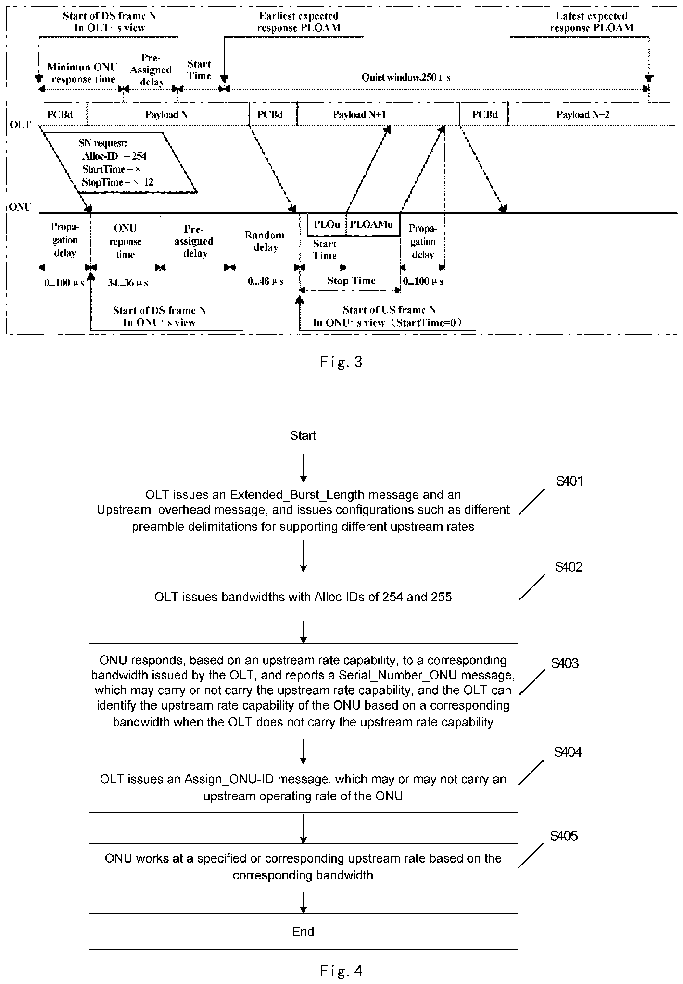

As shown in FIG. 3, corresponding to the GPON asymmetry, the OLT issues a bandwidth with the Alloc-ID of 254, and the ONU reports the SN. Corresponding to the GPON symmetry, the OLT issues a bandwidth with the Alloc-ID of 255, and the ONU reports the SN. Corresponding to the GPON symmetry and symmetry, the OLT issues a bandwidth with the Alloc-ID of 253, and the ONU reports the SN.

Optionally, the above bandwidth transmission time can be determined by, for example, "StartTime" and "StopTime" as shown in FIG. 3, but is not limited to thereto. In other embodiments, the bandwidth transmission time can alternatively be determined according to standard definitions of the industry.

FIG. 4 is a flowchart (1) of a process for determining configuration information when GPON asymmetry and symmetry coexist according to an embodiment of the present disclosure, including the following steps.

S401: OLT issues an Extended_Burst_Length message and an Upstream_overhead message, and issues configurations such as different preamble delimitations for supporting different upstream rates.

S402: OLT issues bandwidths with the Alloc-IDs (allocation identifiers) of 254 and 255.

S403: ONU responds, based on an upstream rate capability, to a corresponding bandwidth issued by the OLT, and reports a Serial_Number_ONU message, which may carry or not carry the upstream rate capability, and the OLT can identify the upstream rate capability supported by the ONU based on a corresponding bandwidth when the OLT does not carry the upstream rate capability.

S404: OLT issues an Assign_ONU-ID message (assignment ONU-ID message), which may or may not carry an upstream working rate of the ONU.

S405: ONU works at a specified upstream rate, or works at an upstream rate corresponding to the response bandwidth.

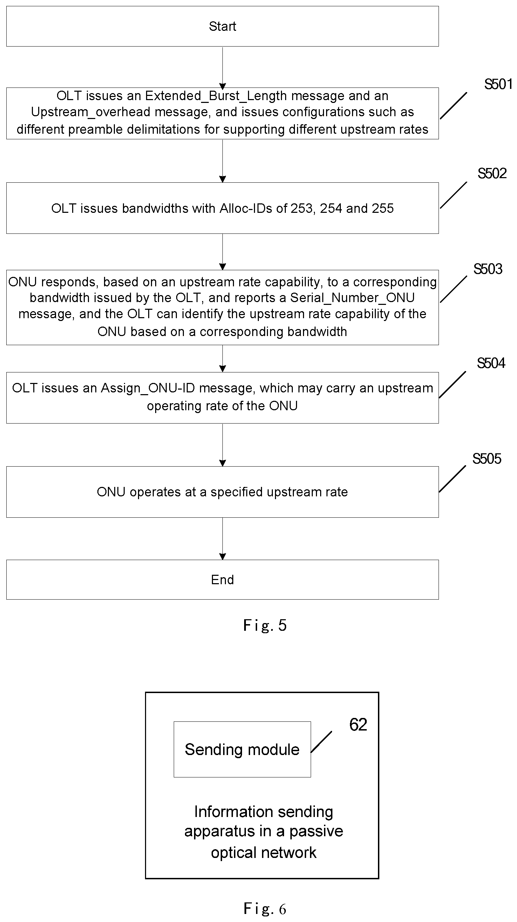

FIG. 5 is a flowchart (2) of a process for determining configuration information when GPON asymmetry and symmetry coexist according to an embodiment of the present disclosure, including the following steps.

S501: OLT issues an Extended_Burst_Length message and an Upstream_overhead message, and issues configurations such as different preamble delimitations for supporting different upstream rates.

S502: OLT issues bandwidths with the Alloc-lDs of 253, 254 and 255.

S503: ONU responds, based on an upstream rate capability, to a corresponding bandwidth issued by the OLT, and reports a Serial_Number_ONU message, and the OLT can identify the upstream rate capability supported by the ONU based on a corresponding bandwidth.

S504: OLT issues an Assign_ONU-ID message, which may carry an upstream operating rate of the ONU.

S505: ONU works at a specified upstream rate.

In the above embodiment, the OLT issues the Extended_Burst_Length message and the Upstream_overhead message, to determine configurations such as preamble delimitations carried by different upstream rates. The OLT issues different windowed bandwidths of the SN, and the ONU reports the SN. The Serial_Number_ONU message may or may not carry the upstream rate capability. To be specific, the OLT directly responds to the different windowed bandwidths in response to the SN through the ONU, indicating that the ONU supports the corresponding upstream rate capability. For the upstream operating rate of the ONU, the Assign_ONU-ID message can be issued by the OLT, which may carry a specific upstream rate at which the ONU is specified to operate, or may not carry the specific upstream rate but indicate that the ONU directly operates at a reported upstream rate. However, for the ONU that supports both the GPON symmetry and asymmetry, the upstream operating rate is specified by the Assign_ONU-ID message. Therefore, coexistence of the GPON symmetry and asymmetry is implemented.

The above embodiment can be applied to a PON system home or enterprise networking, a FTTR scenario, and the like, to provide a wider bandwidth and better user experience. The present disclosure provides a method for processing coexistence of GPON symmetry and asymmetry in a PON system for the GPON. This method is also appropriate for application in an FTTR scenario and G.fin series standards.

Based on the above embodiment, the OLT issues the Extended_Burst_Length message and the Upstream_overhead message, to determine configurations such as preamble delimitations carried by different upstream rates.

In addition, the OLT issues different windowed bandwidths of the SN, and the ONU reports the SN. The Serial_Number_ONU message may or may not carry the upstream rate capability, that is, the OLT directly responds to the different windowed bandwidths in response to the SN through the ONU, indicating that the ONU supports the corresponding upstream rate capability.

For the upstream operating rate of the ONU supporting GPON symmetry or asymmetry, information carried by the Assign_ONU-ID message issued by the OLT may specify that the ONU operates at a specific upstream rate, or the information may not be carried. To be specific, the ONU can respond to the SN and directly operate at a corresponding upstream rate. However, for the ONU that supports both the GPON symmetry and asymmetry, the upstream operating rate needs to be specified by the Assign_ONU-ID message. Therefore, coexistence of the GPON symmetry and asymmetry is implemented.

In this embodiment, a configuration information sending apparatus is also provided. The apparatus is configured to implement the above embodiments and preferred implementations, and the description is not repeated herein. As used below, the term "module" may be a combination of software and/or hardware that implements a predetermined function. Although the device described in the following embodiments is preferably implemented in software, implementation of hardware or a combination of software and hardware is also possible and contemplated.

FIG. 6 is a structural block diagram of a configuration information sending apparatus according to an embodiment of the present disclosure. As shown in Fig. 6, the configuration information sending apparatus includes:
a sending module 62, configured to send configuration information to an ONU through an OLT, where the configuration information indicates information about support of GPON asymmetry and/or GPON symmetry by the PON system, the configuration information is determined in a predefined mode, and the configuration information includes a configuration value of an upstream rate of the ONU.

Configuration information is sent from the OLT to the ONU by using the above apparatus, so that a problem of how to send the configuration information to implement support of coexistence of GPON asymmetry and symmetry by the PON system is resolved.

In an exemplary embodiment, the configuration information sending apparatus further includes a first determining module, configured to obtain initial configuration information of the OLT, where the initial configuration information includes an Extended_Burst_Length message of the ONU; define a first specified byte of the extended burst length message, to obtain an indicated meaning of a first bit of the first specified byte, where the first specified byte is used to represent the upstream rate of the ONU; and determine first configuration information based on an upstream rate value corresponding to the indicated meaning of the first bit, where the configuration information includes the first configuration information, and the indicated meaning of the first bit includes one of the following: the ONU supports the GPON asymmetry, and the ONU supports the GPON symmetry.

In an exemplary embodiment, the configuration information sending apparatus further includes a second determining module, configured to: in the case that the initial configuration information of the OLT further includes the Upstream_Overhead message of the ONU, define a second specified byte of the Upstream_Overhead message, to obtain an indicated meaning of a second bit of the second specified byte, where the second specified byte is used to represent the upstream rate of the ONU; and determine second configuration information based on an upstream rate value corresponding to the indicated meaning of the second bit, where the configuration information includes the first configuration information and the second configuration information, and the indicated meaning of the second bit includes one of the following: the ONU supports the GPON asymmetry. and the ONU supports the GPON symmetry.

In an exemplary embodiment, the sending module is further configured to: obtain an allocation identifier Alloc-ID sent by the OLT to the ONU, where a first specified identification number of the allocation identifier indicates an upstream rate at which the ONU supports the GPON symmetry; and define a bandwidth corresponding to a second specified identification number of the allocation identifier, to obtain a symmetry type, indicated by the second specified identification number, when the ONU replies to a serial number SN, where the symmetry type includes at least one of the following: the GPON asymmetry and the GPON symmetry.

In an exemplary embodiment, the sending module is further configured to: for multiple specified identification numbers to be defined, determine, based on a selection instruction of a target object, the second specified identification number from the multiple specified identification numbers to be defined, or determine, as the second specified identification number, a default specified identification number in the multiple specified identification numbers to be defined, where the default specified identification number is an identification number, in the allocation identifier, indicating a broadcast bandwidth.

In an exemplary embodiment, before the configuration information is sent to the ONU through the OLT, the configuration information sending apparatus further includes a third determining module, which is configured to: receive standard capability information sent by the ONU through the OLT, where the standard capability information indicates an upstream rate capability supported by the ONU, and includes at least the Serial_Number_ONU message; define a third specified byte of the Serial_Number_ONU message, to obtain an indicated meaning of a third bit of the third specified byte, where the third specified byte is used to represent a upstream rate capability supported by the ONU; and determine third configuration information based on an upstream rate value corresponding to the indicated meaning of the third bit, where the configuration information includes the third configuration information, and the indicated meaning of the third bit includes one of the following: the ONU supports the GPON asymmetry, and the ONU supports the GPON symmetry.

In an exemplary embodiment, the sending module is further configured to: receive a serial number SN message sent when receiving the ONU response bandwidth information through the OLT; and determine, based on the serial number message, the upstream rate capability supported by the ONU, where the serial number message includes at least one of the following: an upstream rate at which the ONU supports the GPON asymmetry, and an upstream rate at which the ONU supports the GPON symmetry.

In an exemplary embodiment, the configuration information sending apparatus further includes a fourth determining module, which is configured to: obtain an assignment identification message Assign_ONU-ID message sent by the OLT to the ONU, where the assignment identification message carries a specified upstream rate of the ONU; define a fourth specified byte of the assignment identification message, to obtain an indicated meaning of a fourth bit of the fourth specified byte, where the fourth specified byte is used to represent a standard upstream rate of the ONU; and determine fourth configuration information based on an upstream rate value corresponding to the indicated meaning of the fourth bit, where the configuration information includes the fourth configuration information, and the indicated meaning of the fourth bit includes one of the following: the ONU supports the GPON asymmetry, and the ONU supports the GPON symmetry.

In an exemplary embodiment, the configuration information sending apparatus further includes a fifth determining module, which is configured to: after the fourth specified byte of the assignment identification message is defined, for an ONU supporting the GPON asymmetry or the GPON symmetry, send the assignment identification message to the ONU, to determine the standard upstream rate of the ONU, or determine the standard upstream rate of the ONU based on the upstream rate supported by the ONU; and for the ONU supporting the GPON asymmetry or the GPON symmetry, send the assignment identification message to the ONU through the OLT, to determine the standard upstream rate of the ONU.

In an exemplary embodiment, the configuration information sending apparatus further includes a sixth determining module, which is configured to: determine transmitted data volume and the upstream rate of the ONU within a bandwidth transmission time period of an upstream data frame of the GPON system, and determine a first bandwidth granularity based on the transmitted data volume and the upstream rate; and in the case that the bandwidth transmission time period remains unchanged, multiplying the transmitted data volume and the upstream rate by integer multiples, and determining a multiplier value for multiplying the transmitted data volume or a multiplier value of the upstream rate as a second bandwidth granularity, where the multiplier value of the transmitted data volume and the multiplier value of the upstream rate are the same.

Based on the descriptions of the foregoing implementations, a person skilled in the art may clearly understand that the method based on the above embodiments may be implemented by software in addition to a required universal hardware platform or by hardware only. In most circumstances, the former is a preferred implementation. Based on such understanding, the technical solutions of the present disclosure essentially, or the part contributing to the prior art may be reflected in a form of a software product. The computer software product is stored in a readable storage medium (for example, a ROM/RAM, a magnetic disk, or an optical disc), and includes several instructions for instructing a terminal device (which may be a mobile phone, a computer, a server, a network device, or the like) to perform the method described in the embodiments of the present disclosure.

In an exemplary embodiment, the computer-readable storage medium may include, but is not limited to: a USB flash disk, a read-only memory (ROM), a random access memory (RAM), a mobile hard disk drive, a magnetic disk, an optical disk, or other media that can store a computer program.

For a specific example in this embodiment, reference may be made to the example described in the above embodiment and exemplary implementation, which is not described herein again.

An embodiment of the present disclosure further provides an electronic apparatus, including a memory and a processor. A computer program is stored in the memory, and the processor is configured to run the computer program, so that the steps in any of the above method embodiments are performed.

Optionally, in this embodiment, the above processor may be disposed to perform the following steps by a computer program.

S1: Send configuration information to an ONU through an OLT, where the configuration information indicates information about support of GPON asymmetry and/or GPON symmetry by a PON system, the configuration information is determined in a predefined mode, and the configuration information includes a configuration value of an upstream rate of the ONU.

In an exemplary embodiment, the electronic apparatus may further include a transmission device and an I/O device, where the transmission device is connected to the above processor, and the I/O device is connected to the processor.

Optionally, in this embodiment, the above electronic apparatus may also be disposed to perform step S1 by a computer program.

For a specific example in this embodiment, reference may be made to the example described in the above embodiment and exemplary implementation, which is not described herein again.

Obviously, it should be understood by a person skilled in the art that the above modules or steps in the present disclosure can be implemented by a general computing apparatus, may be concentrated on a single computing apparatus or distributed on a network including a plurality of computing apparatuses, and may be implemented by program code executable by the computing apparatus, so that the above modules or steps may be stored in a storage apparatus and implemented by the computing apparatus. In addition, in some cases, the steps shown or described may be performed in a different order herein, or may be made into individual integrated circuit modules, or a plurality of the modules or steps may be made into a single integrated circuit module for implementation. In this manner, the present disclosure is not limited to any particular combination of hardware and software.

The above descriptions are merely preferred embodiments of the present disclosure, and are not intended to limit the present disclosure. For a person skilled in the art, the present disclosure may have various modifications and variations. Any modifications, equivalent substitutions, improvements, and the like made within the principle of the present disclosure should be included within the protection scope of the present disclosure.

## Claims

1. A configuration information sending method, comprising:
sending configuration information to an optical network unit, ONU, through an optical line terminal, OLT, wherein the configuration information indicates information about support of Gigabit-capable passive optical network, GPON, asymmetry and/or GPON symmetry by a passive optical network, PON, system, the configuration information is determined in a predefined mode, and the configuration information comprises a configuration value of an upstream rate of the ONU.

2. The configuration information sending method according to claim 1, wherein before the configuration information is sent to the ONU through the OLT, the configuration information is determined in the predefined mode:
obtaining initial configuration information of the OLT, wherein the initial configuration information comprises an Extended_Burst_Length message of the ONU;
defining a first specified byte of the Extended_Burst_Length message, to obtain an indicated meaning of a first bit of the first specified byte, wherein the first specified byte is used to represent the upstream rate of the ONU; and
determining first configuration information based on an upstream rate value corresponding to the indicated meaning of the first bit, wherein the configuration information comprises the first configuration information, and the indicated meaning of the first bit comprises one of the following: the ONU supports the GPON asymmetry, and the ONU supports the GPON symmetry.

3. The configuration information sending method according to claim 2, wherein in the case that the initial configuration information of the OLT further comprises an Upstream_Overhead message of the ONU, the method further comprises:
defining a second specified byte of the Upstream_Overhead message, to obtain an indicated meaning of a second bit of the second specified byte, wherein the second specified byte is used to represent the upstream rate of the ONU; and
determining second configuration information based on an upstream rate value corresponding to the indicated meaning of the second bit, wherein the configuration information comprises the first configuration information and the second configuration information, and the indicated meaning of the second bit comprises one of the following: the ONU supports the GPON asymmetry. and the ONU supports the GPON symmetry.

4. The configuration information sending method according to claim 1, wherein in a process of sending the configuration information to the ONU through the OLT, the method further comprises:
obtaining an allocation identifier, Alloc-ID, sent by the OLT to the ONU, wherein a first specified identification number of the allocation identifier indicates an upstream rate at which the ONU supports the GPON symmetry; and
defining a bandwidth corresponding to a second specified identification number of the allocation identifier, to obtain a symmetry type, indicated by the second specified identification number, when the ONU replies to a serial number, SN, wherein the symmetry type comprises at least one of the following: the GPON asymmetry and the GPON symmetry.

5. The configuration information sending method according to claim 4, wherein before the bandwidth corresponding to the second specified identification number of the allocation identifier is defined, the method further comprises:
for multiple specified identification numbers to be defined, determining, based on a selection instruction of a target object, the second specified identification number from the multiple specified identification numbers to be defined, or determining, as the second specified identification number, a default specified identification number in the multiple specified identification numbers to be defined, wherein the default specified identification number is an identification number, in the allocation identifier, indicating a broadcast bandwidth.

6. The configuration information sending method according to claim 1, wherein before the configuration information is sent to the ONU through the OLT, the configuration information is determined in the predefined mode:
receiving standard capability information sent by the ONU through the OLT, wherein the standard capability information indicates an upstream rate capability supported by the ONU, and comprises at least an Serial_Number_ONU message;
defining a third specified byte of the Serial_Number_ONU message, to obtain an indicated meaning of a third bit of the third specified byte, wherein the third specified byte is used to represent a upstream rate capability supported by the ONU; and
determining third configuration information based on an upstream rate value corresponding to the indicated meaning of the third bit, wherein the configuration information comprises the third configuration information, and the indicated meaning of the third bit comprises one of the following: the ONU supports the GPON asymmetry, and the ONU supports the GPON symmetry.

7. The configuration information sending method according to claim 1, wherein in a process of sending the configuration information to the ONU through the OLT, the method further comprises:
receiving, through the OLT, a serial number, SN, message sent by the ONU for responding bandwidth information; and
determining, based on the serial number message, the upstream rate capability supported by the ONU, wherein the serial number message comprises at least one of the following: an upstream rate at which the ONU supports the GPON asymmetry, and an upstream rate at which the ONU supports the GPON symmetry.

8. The configuration information sending method according to claim 1, wherein before the configuration information is sent to the ONU through the OLT, the configuration information is determined in the predefined mode:
obtaining an assignment identification, Assign_ONU-ID, message sent by the OLT to the ONU, wherein the assignment identification message carries a specified upstream rate of the ONU;
defining a fourth specified byte of the assignment identification message, to obtain an indicated meaning of a fourth bit of the fourth specified byte, wherein the fourth specified byte is used to represent a standard upstream rate of the ONU; and
determining fourth configuration information based on an upstream rate value corresponding to the indicated meaning of the fourth bit, wherein the configuration information comprises the fourth configuration information, and the indicated meaning of the fourth bit comprises one of the following: the ONU supports the GPON asymmetry, and the ONU supports the GPON symmetry.

9. The configuration information sending method according to claim 8, wherein after the defining a fourth specified byte of the assignment identification message, the method further comprises:
for an ONU supporting the GPON asymmetry or the GPON symmetry, sending the assignment identification message to the ONU, to determine the standard upstream rate of the ONU, or determine the standard upstream rate of the ONU based on the upstream rate supported by the ONU; and
for the ONU supporting the GPON asymmetry or the GPON symmetry, sending the assignment identification message to the ONU through the OLT, to determine the standard upstream rate of the ONU.

10. The configuration information sending method according to claim 1, wherein in a process of sending the configuration information to the ONU through the OLT, the method further comprises:
determining transmitted data volume and the upstream rate of the ONU within a bandwidth transmission time period of an upstream data frame of the GPON system, and determining a first bandwidth granularity based on the transmitted data volume and the upstream rate; and
in the case that the bandwidth transmission time period remains unchanged, multiplying the transmitted data volume and the upstream rate by integer multiples, and determining a multiplier value for multiplying the transmitted data volume or a multiplier value of the upstream rate as a second bandwidth granularity, wherein the multiplier value of the transmitted data volume and the multiplier value of the upstream rate are the same.

11. A configuration information sending apparatus, comprising:
a sending module, configured to send configuration information to an optical network unit, ONU, through an optical line terminal, OLT, wherein the configuration information indicates information about support of Gigabit-capable passive optical network, GPON, asymmetry and/or GPON symmetry by a passive optical network, PON, system, the configuration information is determined in a predefined mode, and the configuration information comprises a configuration value of an upstream rate of the ONU.

12. A computer-readable storage medium storing a computer program, wherein the computer program is configured to, when executed by a processor, perform the method according to any one of claims 1 to 10.

13. An electronic apparatus, comprising a memory and a processor, wherein a computer program is stored in the memory, and the processor is configured to execute the computer program to perform the method according to any one of claims 1 to 10.
